# EUROPEAN PATENT APPLICATION

(11) **EP 3 556 529 A1**
(43) Date of publication of application: **23.10.2019**
(21) Application number: 19170090.5
(22) Date of filing: 18.04.2019
(51) Int. Cl.: B29C 45/14

(54) **PRODUCTION METHOD OF INSERT-MOLDED PRODUCT AND INSERT-MOLDED PRODUCT**

(30) Priority: 18.04.2018 JP 2018079529
(71) Applicant: Yamaha Fine Technologies Co., Ltd., Shizuoka 435-8568 (JP)
(72) Inventor: Tanaka, Shuji, Shizuoka 4358568 (JP); Imaizumi, Tadashi, Shizuoka 4358568 (JP); Nagase, Fuminori, Shizuoka 4358568 (JP); Suzuki, Katsuya, Shizuoka 4358568 (JP); Uchibori, Yuichi, Shizuoka 4358568 (JP)
(74) Representative: Hoffmann Eitle

(57) **Abstract**

An object of the present invention is to provide a production method of an insert-molded product that is inexpensive and superior in design. The production method of an insert-molded product according to one embodiment of the present invention includes: bonding a plurality of positioning members (3) to a back face side of a thin board-shaped decorative material (1); placing the decorative material (1) in a mold (M) such that the plurality of positioning members (3) are inserted into positioning holes (H) provided on the mold (M); and injecting a resin composition into the mold (M).

## Description

### BACKGROUND OF THE INVENTION

The present invention relates to a production method of an insert-molded product and to an insert-molded product.

### Description of the Related Art

An insert-molded product including a thin board-shaped or sheet-shaped decorative material having a design effect on its surface, has been used for various types of decorative panels such as a door trim, a decorative cover for a center console and a decorative cover for a dashboard of a vehicle, and the like. Such an insert-molded product is produced by placing the decorative material in a mold and then injection-molding a resin composition. Accordingly, since the decorative material needs to be accurately positioned in the mold, a structure for holding the decorative material is provided in the mold.

For example, Japanese Unexamined Patent Application, Publication No. 2006-326916 proposes an insertion molding mold provided with, in a cavity thereof, a holding means for holding a decorative material (insert member). The holding means in the aforementioned publication includes a slide core arranged adjacent to the cavity for forming a front face (designed face) of an insert-molded product. The slide core is capable of: retracting laterally upon placement of the decorative material in the cavity; and projecting to be in contact with an end portion of a back face of the decorative material during molding.

The mold disclosed in the aforementioned publication supposes that the decorative material covers the entire front face of the insert-molded product, and that the end portion of the decorative material held by the holding means extends to a lateral face of the insert-molded product. In other words, the mold disclosed in the aforementioned publication cannot be used in a case in which the decorative material is to be provided only in a central part of the front face of the insert-molded product.

In order to produce a decorative panel in which a resin composition is overlaid on the entire back face side of the decorative material, by using the mold disclosed in the aforementioned publication, it may be contemplated to provide the decorative material with a tab-like portion that extends to the outside of the decorative panel to be obtained, to hold the tab-like portion with the slide core, and, after the insert molding, to cut off the tab-like portion held by the slide core. However, in the case of cutting off a part of the insert-molded product, production cost of the decorative panel is increased due to an additional production step. In addition, depending on the type of the decorative material, a rough cutting plane of the decorative material may be noticeable and the appearance of the decorative material may be impaired due to, for example, fibers sticking out from the decorative material, a base layer being exposed of a multilayer decorative material, and the like.

### Prior Art Documents

### Patent Documents

Patent Document 1: Japanese Unexamined Patent Application, Publication No. 2006-326916

### SUMMARY OF THE INVENTION

### Problems to be Solved by the Invention

In view of the inconvenience described above, it is an object of the present invention to provide a production method of an insert-molded product that is inexpensive and superior in design, and an insert-molded product that is inexpensive and superior in design.

### Means for Solving the Problems

A production method of an insert-molded product according to an aspect of the present invention made for solving the aforementioned problems includes: bonding a first positioning member to a back face side of a thin board-shaped decorative material; placing the decorative material in a mold having a positioning hole such that the first positioning member is inserted into the positioning hole; and injecting a resin composition into the mold.

An insert-molded product according to another aspect of the present invention includes: a thin board-shaped decorative material disposed on a front face side of the insert-molded product; a resin layer overlaid on a back face side of the decorative material; and a member that is bonded to the back face side of the decorative material and provided through the resin layer.

### BRIEF DESCRIPTION OF THE DRAWINGS

Fig. 1 is a schematic cross sectional view showing a constitution of an insert-molded product according to one embodiment of the present invention;
Fig. 2 is a flow chart showing steps of a production method of the insert-molded product shown in Fig. 1;
Fig. 3 is a schematic cross sectional view of a mold used in the placing shown in Fig. 2;
Fig. 4 is a schematic cross sectional view of a mold different from that shown in Fig. 3; and
Fig. 5 is a schematic cross sectional view of a mold different from those shown in Figs. 3 and 4.

### Description of Embodiments

A production method of an insert-molded product according to one embodiment of the present invention includes: bonding a first positioning member to a back face side of a thin board-shaped decorative material; placing the decorative material in a mold having a positioning hole such that the first positioning member is inserted into the positioning hole; and injecting a resin composition into the mold.

In the production method of the insert-molded product, the first positioning member may include a protruding portion that is to be inserted into the positioning hole and a flat portion that is provided at an end of the protruding portion and to be bonded to the decorative material.

In the production method of the insert-molded product, a principal component of the first positioning member may be a resin that is identical to a resin contained as a principal component of the resin composition.

The production method may further include bonding a second positioning member to the back face side of the decorative material, the second positioning member being to be inserted into another positioning hole provided on the mold, in which:
the second positioning member includes a protruding portion that is to be inserted into the another positioning hole and a flat portion that is provided at an end of the protruding portion and to be bonded to the decorative material;
a principal component of the second positioning member is a resin that is identical to a resin comprised as a principal component of the resin composition; and
the first and the second positioning members are arranged such that a distance between a center of the first positioning member and a center of the second positioning member may account for 50% or greater of a maximum length of the decorative material.

An insert-molded product according to another embodiment of the present invention includes: a thin board-shaped decorative material disposed on a front face side of the insert-molded product; a resin layer overlaid on a back face side of the decorative material; and a member that is bonded to the back face side of the decorative material and provided through the resin layer.

According to the production method of an insert-molded product according to one embodiment of the present invention and the insert-molded product according to another embodiment of the present invention, since the decorative material is positioned in the mold by means of the positioning member bonded to the back face side of the decorative material not visible from the front face side, an insert-molded product that is inexpensive and superior in design is enabled to be provided.

Embodiments of the present invention will be described in detail hereinafter, with appropriate reference to the drawings.

### Insert-Molded Product

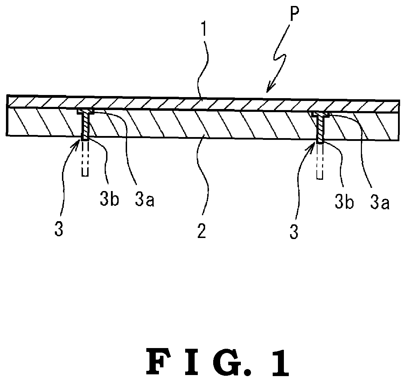

Fig. 1 shows the insert-molded product P according to one embodiment of the present invention.

The insert-molded product P includes: a thin board-shaped decorative material 1 disposed on a front face side (side mainly visible during use); a resin layer 2 overlaid on a back face side of the decorative material 1; and a positioning member 3 that is bonded to the back face side of the decorative material 1 and provided through the resin layer 2.

The insert-molded product P may be used as, for example, an interior decoration panel for a vehicle (a door trim, a decorative cover for a center console, a decorative cover for a dashboard, etc.), and the like. Accordingly, the insert-molded product P may have an arbitrary planar shape in accordance with an intended use, or may be formed in a three-dimensionally curved shape. In addition, in the insert-molded product P, the resin layer 2 may have, for example, a reinforcement structure such as ribs, a structure for attachment to other member such as a tongue with a screw hole, and the like.

### Decorative Material

The decorative material 1 is a material with a design effect. Examples of the decorative material 1 include a thin board made from wood, a woven fabric, paper, a resin sheet, a composite material thereof, and the like. The front face side of the decorative material 1 may be colored for the design effect, for example by printing.

The back face side of the decorative material 1 may have been subjected to a treatment for improving adhesiveness to the resin layer 2. Examples of the treatment include roughing, application of a primer, and the like.

The decorative material 1 preferably has such a strength that the shape thereof can be retained only by holding with a small number of the positioning members 3, without the resin layer 2 being overlaid.

The decorative material 1 may be present only on the front face side of the insert-molded product P. In other words, the decorative material 1 may be a flat plate-shaped body without a portion folded back toward the back face side of the insert-molded product P. The decorative material 1 may not be present on the entire front face side of the insert-molded product P and may not reach, at least partially, a lateral face of the insert-molded product P.

The lower limit of an average thickness of the decorative material 1 is preferably 0.1 mm and more preferably 0.2 mm. Meanwhile, the upper limit of the average thickness of the decorative material 1 is preferably 1.5 mm and more preferably 1.2 mm. When the average thickness of the decorative material 1 is less than the lower limit, the decorative material 1 may be deformed or broken during production of the insert-molded product P, and consequently the design effect may be impaired. To the contrary, when the average thickness of the decorative material 1 is greater than the upper limit, the thickness of the insert-molded product P may be unduly large.

### Resin Layer

The resin layer 2 is formed by overlaying a resin composition on the back face side of the decorative material 1. The resin layer 2 may cover lateral faces of the decorative material 1.

The resin layer 2 defines a shape of at least the back face side of the insert-molded product P, and guarantees the strength of the insert-molded product P. Accordingly, the resin layer 2 may have a reinforcement structure such as ribs on the back face side. In addition, the resin layer 2 may have a connecting structure for attaching the insert-molded product P to other member.

A principal component of the resin layer 2 may be any thermoplastic resin suited for injection molding, and examples thereof include: polyolefins such as polyethylene and polypropylene; polyesters such as polyethylene terephthalate and polybutylene terephthalate; ABS resins (acrylonitrile butadiene styrene copolymers); PC resins (polycarbonates); acrylic resins; and the like.

The resin layer 2 may contain a filler for improving strength, e.g. glass fiber, carbon fiber, ceramic fiber, a mineral based filler and the like, or a filler for imparting other functions.

The lower limit of an average thickness of the resin layer 2 depends on a material and required strength, and may be, for example, 1 mm or greater and 10 mm or less.

### Positioning Member

One end of the positioning member 3 is bonded to the decorative material 1 with an adhesive. Meanwhile, another end of the positioning member 3 is exposed to the back face side of the resin layer 2. The another end of the positioning member 3 on the back face side may protrude from the resin layer 2.

As described later in detail, the positioning member 3 positions the decorative material 1 in the mold. During production of the insert-molded product P, this positioning is realized by holding the positioning member 3, bonded to the decorative material 1, by a mold segment on an opposite side to the decorative material 1. In other words, the insert-molded product P is formed by insert molding, in which the resin composition constituting the resin layer 2 is injected to a gap between the decorative material 1 held in the mold by the positioning member 3 and the mold holding the decorative material 1.

In addition, the positioning member 3 may have, on a portion protruding from the resin layer 2, a connecting structure for attaching the insert-molded product P to other member.

The insert-molded product P preferably has a plurality of the positioning members 3 for accurate positioning and orientation of the decorative material 1 during production. The number of the positioning members 3 depends on the size of the insert-molded product P and rigidity of the decorative material 1, but is preferably 2. When there are a large number of the positioning members 3, it may be difficult to absorb an error in bonding position of the positioning member 3 with respect to the decorative material 1 by deflection of the decorative material 1.

In the case of employing the plurality of positioning members 3, the positioning members 3 are preferably arranged as follows. The lower limit of a distance between centers of the positioning members 3 is preferably 50%, and more preferably 60% of the maximum length of the decorative material 1 (in the present embodiment, equivalent to the maximum length of the insert-molded product P). Meanwhile, the upper limit of the distance between centers of the positioning members 3 is preferably 95%, and more preferably 90% of the maximum length of the decorative material 1 (in the present embodiment, equivalent to the maximum length of the insert-molded product P). The "center of the positioning member 3" as referred to herein means a center (center of gravity) of a lateral cross section of the positioning member 3. In addition, the "distance between centers of the positioning members 3" as referred to herein means a distance between a center of one positioning member (first positioning member) and a center of the other positioning member (second positioning member), the first and second positioning members being two positioning members arbitrarily selected from the plurality of positioning members 3. When the distance between centers of the positioning members 3 is less than the lower limit, it may be difficult to absorb an error in bonding position of the positioning member 3 by deflection of the decorative material 1. To the contrary, when the distance between centers of the positioning members 3 is greater than the upper limit, short-shot of the resin layer 2 may be caused due to the positioning member 3 being present in the vicinity of the end of the molded product P.

The principal component of the positioning member 3 is preferably a resin that is identical to the resin contained as the principal component of the resin layer 2. In the case of the positioning member 3 and the resin layer 2 thus being formed from the identical material, the positioning member 3 is enabled to be firmly integrated with the resin layer 2.

The positioning member 3 may have a constitution including: a flat portion 3a that provides a bond face to be bonded to the back face side of the decorative material 1; and a protruding portion 3b that extends from the flat portion 3a toward the back face side and reaches the back face side of the resin layer 2. In the case of the positioning member 3 thus including the flat portion 3a and the protruding portion 3b, the positioning member 3 is easily bonded to the decorative material 1.

The specific shape of the positioning member 3 is not particularly limited, and may include, as illustrated in the figure: the flat portion 3a formed in a shape of a board; and the protruding portion 3b formed in a shape of a shaft (round shaft or polygonal shaft) that extends from a part, preferably a central part, of a back face side of the board-shaped flat portion 3a.

The planar shape of the flat portion 3a of the positioning member 3 is preferably circular. In the case of the flat portion 3a of the positioning member 3 being formed in a circular shape, an adhesive can be easily applied (droplet can be easily placed) even on the flat portion 3a small in area.

The lateral cross-sectional shape of the protruding portion 3b of the positioning member 3 is preferably circular. In the case of the protruding portion 3b of the positioning member 3 being cylindrical, an angle of the protruding portion 3b around an axis becomes immaterial, and consequently production of the insert-molded product P is facilitated. It is to be noted that, as described later, in the case of the lateral cross-sectional shape of the protruding portion 3b of the positioning member 3 being other than a circular shape, the number of the positioning member 3 may be 1.

The cross-sectional area of the protruding portion 3b of the positioning member 3 may be smaller than the cross-sectional area of a face (bond face) of the flat portion 3a to be opposed to the decorative material 1. In the case of thus using the positioning member 3 having the protruding portion 3b small in cross-sectional area, the positioning member 3 is enabled to be reliably held in the resin layer 2, and the portion of the positioning member 3 protruding from the resin layer 2 is enabled to be easily cut off. In other words, the portion of the positioning member 3 of the insert-molded product P, protruding from the resin layer 2 may be partially or entirely cut off.

With the portion protruding from the resin layer 2 not being cut off, an edge between the peripheral face and an end face of a tip end of the protruding portion 3b (end on the opposite side to the flat portion 3a) of the positioning member 3 may be beveled. In the case of the tip end of the protruding portion 3b thus being beveled, the positioning member 3 is enabled to be easily placed in the mold, upon injection molding of the insert-molded product P as described later.

The lower limit of an area of the bond face of the positioning member 3 to be bonded to the decorative material 1 (face of the flat portion 3a to be opposed to the decorative material 1) is preferably 10 mm² and more preferably 15 mm². Meanwhile, the upper limit of the area of the bond face of the positioning member 3 is preferably 80 mm² and more preferably 50 mm². When the area of the bond face of the positioning member 3 is less than the lower limit, bonding of the positioning member 3 to the decorative material 1 may be difficult. To the contrary, when the area of the bond face of the positioning member 3 is greater than the upper limit, due to a great bonding area, a deformation may be caused on the decorative material 1 which impairs appearance.

The lower limit of an average thickness of the flat portion 3a of the positioning member 3 is preferably 0.5 mm and more preferably 0.8 mm. Meanwhile, the upper limit of the average thickness of the flat portion 3a of the positioning member 3 is preferably 3.0 mm and more preferably 2.5 mm. When the average thickness of the flat portion 3a is less than the lower limit, strength of the flat portion 3a may be insufficient. To the contrary, when the average thickness of the flat portion 3a is greater than the upper limit, the flat portion 3a may not be embedded in the resin layer 2, and consequently the positioning member 3 may be detached from the insert-molded product P.

The lower limit of an average diameter (equivalent circle diameter) of the protruding portion 3b of the positioning member 3 is preferably 1.0 mm and more preferably 1.5 mm. Meanwhile, the upper limit of the average diameter of the protruding portion 3b of the positioning member 3 is preferably 4 mm and more preferably 3 mm. When the average diameter of the protruding portion 3b of the positioning member 3 is less than the lower limit, strength of the protruding portion 3b may be insufficient, and consequently the decorative material 1 may not be accurately positioned in the mold upon production of the insert-molded product P. To the contrary, when the average diameter of the protruding portion 3b of the positioning member 3 is greater than the upper limit, it may not be easy to cut off the portion of the positioning member 3 protruding from the resin layer 2.

The length of the positioning member 3 is preferably greater than the average thickness of the resin layer 2; however, the length of the positioning member 3 may be less than the average thickness of the resin layer 2 when a concave portion is provided on the resin layer 2 to locally reduce a thickness where the positioning member 3 is provided through the resin layer 2.

Specifically, the lower limit of the length of the positioning member 3 depends on the thickness of the resin layer 2, and is preferably 5 mm and more preferably 10 mm. Meanwhile, the upper limit of the length of the positioning member 3 is preferably 50 mm and more preferably 45 mm. When the length of the positioning member 3 is less than the lower limit, the mold may not reliably retain the positioning member 3 upon production of the insert-molded product P, and consequently the decorative material 1 may not be accurately positioned. To the contrary, when the length of the positioning member 3 is greater than the upper limit, an additional step of pressing in the positioning member 3 is required after insertion into the mold.

### Production Method of Insert-Molded Product

The insert-molded product P illustrated in Fig. 1 can be produced by the production method of an insert-molded product which itself is one embodiment of the present invention.

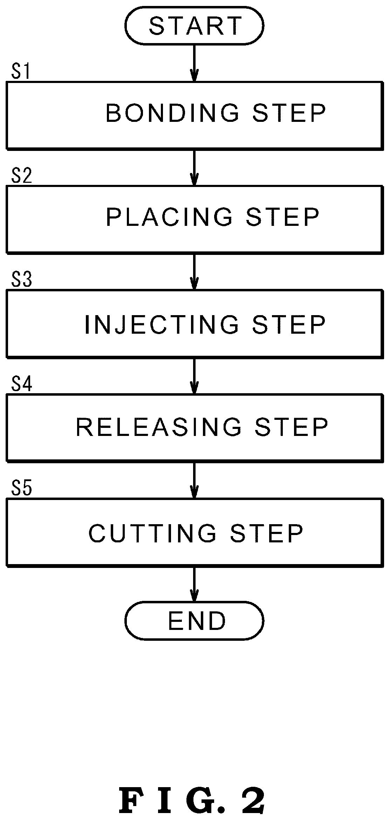

Fig. 2 shows steps of the production method of the insert-molded product.

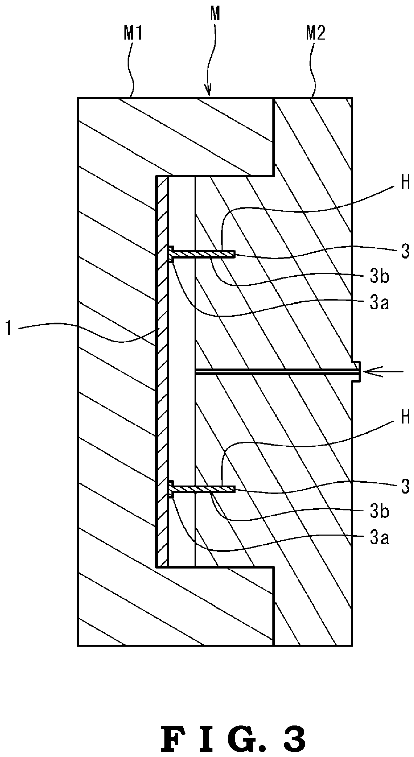

The production method of an insert-molded product includes: bonding the plurality of positioning members 3 to a back face side of the decorative material 1 (Step S1: Bonding step); placing the decorative material 1 in the mold M such that the plurality of positioning members 3 are inserted into positioning holes H provided on the mold M as illustrated in Fig. 3 (Step S2: Placing step); injecting the resin composition into the mold M to form the insert-molded product P (Step S3: Injecting step); releasing the insert-molded product P from the mold M (Step S4: Releasing step); and cutting off the portion of each of the positioning members 3 protruding from the resin layer 2 (Step S5: Cutting step).

### Bonding Step

In the bonding step (Step S1), the positioning members 3 are bonded to the back face side of the decorative material 1 at positions corresponding to the positioning holes H on the mold M.

In order to enable bonding of the positioning members 3 at accurate positions on the decorative material 1, it is preferred in the bonding step to use a bonding jig designed for fixing relative positions of the positioning members 3 with respect to the decorative material 1.

Examples of the adhesive to be applied on the bond face of the positioning member 3 include an instant adhesive, an epoxy adhesive, a urethane adhesive, a hot melt adhesive, a vinyl acetate adhesive, a rubber adhesive, a double-stick tape, and the like. Of these, liquid adhesives having low viscosity such as the instant adhesive is preferred, since a thickness of an adhesive layer to be formed between the decorative material 1 and the positioning member 3 would be relatively small, whereby the positioning member 3 is enabled to be bonded, with no tilt, to the decorative material 1.

An amount of the adhesive applied to each positioning member 3 is preferably determined such that the adhesive spreads all over the bond face when the positioning member 3 is bonded to the decorative material 1. The specific amount of the liquid adhesive applied to each positioning member 3 depends on the size of the bond face of the positioning member 3, the type of the adhesive, and the like. For example, about 1 to 3 droplets suffice. The positioning member 3 is maintained in a state of being pressed against the decorative material 1 until the adhesive hardens.

During this step, the adhesive preferably spreads all over the bond face of the positioning member 3, and may go beyond the bond face to remain in a fillet-like shape in a corner between the back face of the decorative material 1 and an outer peripheral surface of the positioning member 3.

### Placing Step

In the placing step (Step S2) shown in Fig. 2, by inserting the positioning members 3 into the positioning holes H provided on the mold M, the decorative material 1 is held by, for example, one of a female mold segment M1 and a male mold segment M2 (typically the male mold segment M2) constituting the mold M. Thereafter, by clamping the mold M, the decorative material 1 can be accurately held inside the mold M.

When the lateral cross-sectional shape of the protruding portion 3b of the positioning member 3 is other than a circular shape, the number of the positioning member 3 may be one, since both a position of the decorative material 1 in a planar direction (in-plane direction) and an orientation of the positioning member 3 around a central axis can be fixed by inserting the positioning member 3 into the positioning hole H.

In the case of thus holding the decorative material 1 in the mold M by means of the single positioning member 3, it is preferred that the protruding portion 3b has a plane on an outer periphery, and the positioning hole H has a plane to be in contact with the plane on the outer periphery of the protruding portion 3b. Specifically, the lateral cross-sectional shape of the protruding portion 3b of the positioning member 3 may be a rectangle, and a lateral cross-sectional shape of the positioning hole H may be a rectangle that coincides with the lateral cross-sectional shape of the protruding portion 3b.

### Mold

As shown in Fig. 3, in the mold M, the positioning hole H, into which the positioning member 3 is to be inserted, is provided on a portion (male mold segment M2) that forms the back face side of the insert-molded product P.

The positioning hole H positions the positioning member 3 particularly in a planar direction of the decorative material 1.

It is to be noted that the mold M is designed such that the orientation direction of the front face side of the insert-molded product P, in turn the opening of the positioning hole H, is horizontal or more upward than horizontal, in order to hold the decorative material 1.

The lower limit of a clearance between the positioning hole H and the positioning member 3 (difference between a radius of the positioning hole H and a radius of the positioning member 3) is preferably 2 µm and more preferably 6 µm. Meanwhile, the upper limit of the clearance between the positioning hole H and the positioning member 3 is preferably 30 µm and more preferably 20 µm. When the clearance between the positioning hole H and the positioning member 3 is less than the lower limit, insertion of the positioning member 3 into the positioning hole H may be difficult. To the contrary, when the clearance between the positioning hole H and the positioning member 3 is greater than the upper limit, the resin composition may enter a gap between the positioning hole H and the positioning member 3 during the subsequent injecting step, whereby a burr may be formed on the back face side of the insert-molded product P.

On the other hand, in positioning of the decorative material 1 in the normal direction, the decorative material 1 may be brought into a close contact with a portion inside a cavity of the mold M corresponding to the front face of the insert-molded product P, through selection of a depth of the positioning hole H. It is to be noted that, even if a small gap is formed between the decorative material 1 and the portion inside a cavity of the mold M corresponding to the front face of the insert-molded product P, a pressure from the resin composition injected into the mold M can bring the decorative material 1 into a close contact with the cavity of the mold M in the subsequent injecting step.

### Injecting Step

In the injecting step (Step S3), the resin composition is injected into the cavity of the mold M and then cooled to harden, whereby the insert-molded product P is formed in which the resin layer 2 is overlaid on the back face side of the decorative material 1.

### Releasing Step

In the releasing step (Step S4), the mold M is separated to release the insert-molded product P.

### Cutting Step

In the cutting step (Step S5), the portion of the positioning member 3 of the insert-molded product P protruding from the resin layer 2 is cut off.

When the protruding portion 3b of the positioning member 3 is sufficiently small in diameter, the cutting step may be conducted by an operator through manually folding to break the protruding portion 3b.

### Advantages

In the insert-molded product P, the positioning member 3 is bonded to the back face side of the decorative material 1. The positioning member 3 is used to position the decorative material 1 in the mold M for forming the resin layer 2 by injection molding. Since the positioning member 3 is bonded to the back face side of the decorative material 1 not visible during use of the insert-molded product P, the positioning member 3 does not impair appearance. Therefore, no aesthetic processing is required for the positioning member 3 after the injection molding, whereby the insert-molded product P is relatively inexpensive and superior in design.

Furthermore, since the positioning member 3 is bonded to the back face side of the decorative material 1, a design may be employed for the insert-molded product P in which the decorative material 1 is arranged only in a central part of the front face and the resin layer 2 is exposed on an entire outer periphery of the front face.

### Other Embodiments

The embodiments described above do not restrict the constituent features of the present invention. Therefore, any omission, substitution and addition of each of the constituent features of the embodiments can be made on the basis of the description of the present specification and common general technical knowledge, and such omitted, substituted and/or added features are to be construed to entirely fall under the scope of the present invention.

In the production method of an insert-molded product, the cutting step may be omitted.

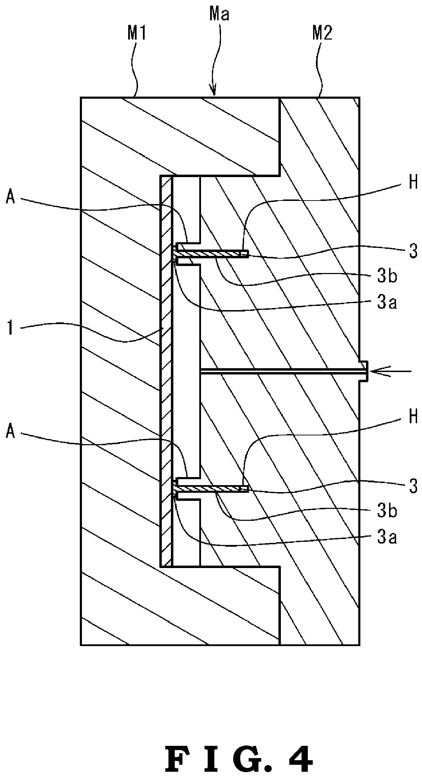

The mold used in the production method of an insert-molded product may be designed such that the decorative material 1 is positioned in the normal direction by means of a projection A that abuts the back face of the flat portion 3a as in a mold Ma shown in Fig. 4, instead of the tip end of the protruding portion 3b of the positioning member 3. The mold Ma shown in Fig. 4 may have a constitution similar to that of the mold M shown in Fig. 3, except that the projection A is provided and the positioning hole H is greater in depth. Therefore, explanation of members in the mold Ma shown in Fig. 4 in common with the mold M shown in Fig. 3 is omitted herein. In the case of employing such a mold Ma, an effect is also produced of preventing deformation of the protruding portion 3b due to the pressure from the resin composition during the injection molding. It is to be noted that the projection A is designed to be small enough not to impair the strength of the insert-molded product.

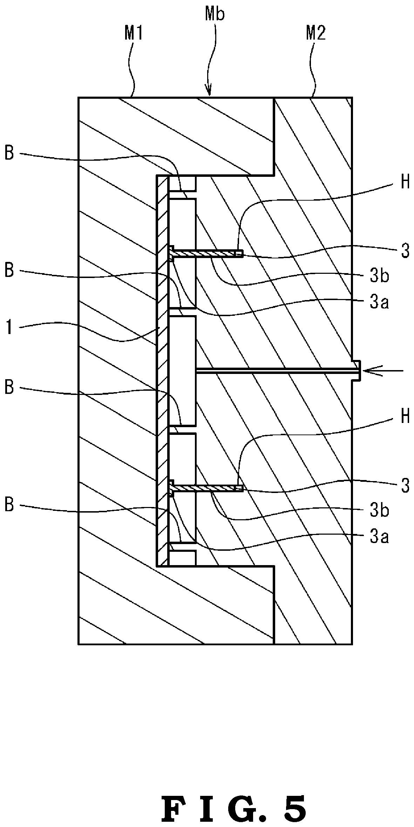

Alternatively, the mold may be designed such that the decorative material is positioned in the normal direction by means of a projection B that abuts the back face of the decorative material as in a mold Mb shown in Fig. 5. The projection B may be used in combination with a configuration for positioning the back face of the flat portion 3a or the tip end of the protruding portion 3b of the positioning member 3.

The positioning member to be used for the insert-molded product and in the production method of an insert-molded product may have a shape extending along the back face side of the decorative material, in other words an elongated shape in the normal direction of the decorative material. As a specific example, the positioning member may be provided with a strip-like protruding portion that is to be bonded to the back face side of the decorative material to form a rib-like portion.

The positioning member may also have a shape with no geometric difference between the flat portion and the protruding portion, for example an entirely columnar shape such as a cylindrical shape, a rectangular column shape, etc. with a uniform section. The cross-sectional area of the bond face of the flat portion of the positioning member to be opposed to the decorative material may be smaller than the cross-sectional area of the protruding portion. In addition, the cross-sectional shape of the protruding potion of the positioning member may vary along the axial direction. For example, the lateral cross-sectional area of the protruding potion may be gradually decreased along the axial direction, or the cross-section of the protruding potion may change in geometry from a shape (e.g., circular shape) similar to the flat portion to a shape (e.g., rectangular shape) suited to be held by the positioning hole on the mold.

### INDUSTRIAL APPLICABILITY

The insert-molded product produced by the production method of an insert-molded product according to one embodiment of the present invention and the insert-molded product according to another embodiment of the present invention can be suitably used as, for example, an interior decoration material for a vehicle.

### Explanation of the Reference Symbols

1 Decorative material
2 Resin layer
3 Positioning member
3a Flat portion
3b Protruding portion
M, Ma, Mb Mold
M1 Female mold segment
M2 Male mold segment
P Insert-molded product
S1 Bonding step
S2 Placing step
S3 Injecting step
S4 Releasing step
S5 Cutting step

## Claims

1. A production method of an insert-molded product comprising:
bonding a first positioning member to a back face side of a thin board-shaped decorative material;
placing the decorative material in a mold having a positioning hole such that the first positioning member is inserted into the positioning hole; and
injecting a resin composition into the mold.

2. The production method according to claim 1, wherein the first positioning member comprises a protruding portion that is to be inserted into the positioning hole and a flat portion that is provided at an end of the protruding portion and to be bonded to the decorative material.

3. The production method according to claim 1 or 2, wherein a principal component of the first positioning member is a resin that is identical to a resin comprised as a principal component of the resin composition.

4. The production method according to any one of claims 1 to 3, further comprising bonding a second positioning member to the back face side of the decorative material, the second positioning member being to be inserted into another positioning hole provided on the mold, wherein:
the second positioning member comprises a protruding portion that is to be inserted into the another positioning hole and a flat portion that is provided at an end of the protruding portion and to be bonded to the decorative material;
a principal component of the second positioning member is a resin that is identical to a resin comprised as a principal component of the resin composition; and
the first and the second positioning members are arranged such that a distance between a center of the first positioning member and a center of the second positioning member accounts for 50% or greater of a maximum length of the decorative material.

5. An insert-molded product comprising:
a thin board-shaped decorative material;
a resin layer overlaid on a back face side of the decorative material; and
a member that is bonded to the back face side of the decorative material and provided through the resin layer.
